# EUROPÄISCHE PATENTANMELDUNG

(11) **EP 3 095 318 A1**
(43) Veröffentlichungstag der Anmeldung: **23.11.2016**
(21) Anmeldenummer: 16169843.6
(22) Anmeldetag: 17.05.2016
(51) Int. Cl.: A01G 9/02

(54) **ZERLEGBARER BEHÄLTER MIT THERMISCHER ISOLATION**

(30) Priorität: 19.05.2015 DE 102015107826
(71) Anmelder: Schöne, Eckhard, 06571 Wiehe (DE)
(72) Erfinder: Schöne, Eckhard, 06571 Wiehe (DE)
(74) Vertreter: Kohler Schmid Möbus Patentanwälte

(57) **Zusammenfassung**

Ein zerlegbarer Behälter (1), insbesondere ein Pflanzenkübel, mit über Nut-Feder-Verbindungen (2) miteinander verbundenen Dauben (3), welche die Behälterwände bilden, sowie mit einem Behälterboden (4), wobei der Behälter ausschließlich durch die Nut-Feder-Verbindungen zusammengehalten wird, ist dadurch gekennzeichnet, dass der Behälter eine Einrichtung zur thermischen Isolation der Behälterwände sowie des Behälterbodens nach außen hin aufweist, welche eine Vielzahl von Kammern (5,5') umfasst, die mit Luft und/oder einem Isoliermaterial gefüllt sind, und die durch im zusammengebauten Zustand des Behälters zur Behälter-Innenseite hin gerichtete, an den Dauben und dem Behälterboden angebrachte Stege (6,6') sowie ein diese Stege zur Behälter-Innenseite hin abdeckendes Einsatzteil (7) gebildet werden. Damit entsteht aufgrund der mit Luft oder Dämmstoff gefüllten Kammern ein äußerst wirksamer Schutz gegen Frosteinwirkung insbesondere für die besonders empfindlichen Wurzeln von im Behälter eingepflanzten Gewächsen, auch wenn der Behälter ganzjährig im Freien platziert bleibt. Außerdem kann der Behälter ohne Zuhilfenahme von Spezial-Werkzeugen direkt vom Benutzer aus den vorgefertigten und leicht per Post versendbaren Einzelteilen problemlos von Hand zusammengesetzt werden. Die Produktion der Einzelteile des Behälters ist einfach und kostengünstig.

## Beschreibung

Die Erfindung betrifft einen zerlegbaren Behälter, insbesondere einen Pflanzenkübel, mit über Nut-Feder-Verbindungen miteinander verbundenen Dauben, welche die Behälterwände bilden, sowie mit einem Behälterboden, wobei der Behälter ausschließlich durch die Nut-Feder-Verbindungen zusammengehalten wird.

Ein derartiger Behälter ist bekannt aus der DE 102 19 049 B4.

Solche bekannten Behälter finden Verwendung vor allem zum Einpflanzen von Blumen, Büschen, Sträuchern oder Bäumchen, die im eingepflanzten Zustand zusammen mit dem Pflanzenkübel bewegbar sein sollen. Meistens werden diese bepflanzten Kübel im Sommerhalbjahr auf den Balkon, die Terrasse oder in den Garten gestellt, während sie im Winterhalbjahr in einem frostfreien Raum aufbewahrt werden. Viele Anwender belassen die Pflanzenkübel jedoch auch im Winter an ihrem Standort im Freien, so dass dann die Pflanzen -zumindest in Mitteleuropa- entweder von Natur aus winterhart sein müssen oder in irgendeiner Weise vor Frost geschützt werden sollten, um das nächste Frühjahr lebend zu erreichen.

Aus dem Stand der Technik sind mehrere unterschiedliche Bauformen von zerlegbaren Pflanzenkübeln bekannt, die häufig einen rechteckigen Grundriss aufweisen (siehe etwa DE 43 34 781 C2). Pflanzenkübel mit einem runden Grundriss, bei denen die einzelnen Dauben an ihren beiden Längsseiten mit Nuten und/oder Federn versehen sein sollen, sind beispielsweise in DE 197 37 451 C2 oder WO 85/01715 A1 beschrieben. Wenn die Nuten und Federn seitlich ineinander steckbar (vergleichbar wie bei Fußbodendielen) ausgebildet sind, bedarf es in jedem Fall für die Dauben des Planzenkübels von außen umfassender Ringe. Derartige Ausführungen sind quasi vom Endkunden nicht selbst zusammenbaubar, erst recht nicht, wenn keine Nuten und Federn vorgesehen und die Dauben auf Stoß gearbeitet sind. Diese Kübel werden deshalb immer nur vollständig montiert ausgeliefert. Dieses Problem soll nach DE 197 37 451 C2 für rohrförmige, zylindrische Gefäße dadurch gelöst werden, dass die Dauben an ihren Längsseiten mit Nuten und Federn versehen sind, die ineinander gesteckt werden können. Durch die dort vorgesehene Profilgebung der Nuten und Federn sind praktisch jedoch nur zylindrische Gefäße herstellbar.

Die DE 11 06 677 C offenbart einen Flüssigkeitsbehälter von Kreiszylinderform aus Holz mit einer äußeren Metallwand, der aus mehreren koaxialen Kreiszylinderschalen besteht, und bei dem die Holzfasern in jeder Schicht in einer einzigen Richtung parallel zur Schichtebene verlaufen und die Richtungen der Fasern in benachbarten schichten im rechten Winkel zueinander liegen, wobei die Fasern der innersten Schicht parallel zur Krümmungsachse verlaufen und wobei der Behälter zwei koaxiale Kreis-zylinderschalen aus Balsaholz hat, von denen jede aus einer Anzahl von stirnseitig aneinandergesetzten Ringen hergestellt ist, wobei jeder Ring von mehreren gleichgebogenen, mehrschichtigen Teilen gebildet wird, und die Verschlüsse des Behälters ebenfalls aus Balsaholz bestehen, welches in Schichten senkrecht zur Längsachse des Behälters angeordnet sind.

Die FR-A 892 262 offenbart einen kegelstumpfförmigen Behälter, zu dessen Zusammenhalt Befestigungsstreifen benötig werden.

Aus der US-A 1,334,186 ist ein Behälter bekannt, der eine Kreiszylinderform aufweist und zu dessen Zusammenhalt ebenfalls Befestigungsstreifen vorgesehen sind.

Die US-A 3,462,038 offenbart einen Behälter, der im Wesentlichen einen quadratischen Querschnitt besitzt, bei dem die Dauben durch Halteringe zusammengehalten werden.

Bei allen diesen im oben zitierten Stand der Technik beschriebenen zerlegbaren Kübeln ist es nachteilig, dass sie zur Montage jeweils SpezialWerkzeuge sowie handwerkfiches Geschick erfordern, um einen dichten, stabilen und sich selbst stützenden Behälter aus den ursprünglichen Einzelteilen herzustellen.

Alle diese Problematiken löst nun die eingangs zitierte DE 102 19 049 B4 dadurch, dass der Behälter kegelstumpfförmig ist und ausschließlich durch die Nut-Feder-Verbindungen der Dauben zusammengehalten wird.

Allerdings bietet auch dieser bekannte Behälter den darin befindlichen Pflanzen, insbesondere den empfindlichen Pflanzenwurzeln im Winter keinen wirksamen Schutz gegen Frost.

Aufgabe der vorliegenden Erfindung ist es demgegenüber daher, einen gattungsgemäßen zerlegbaren Behälter der eingangs beschriebenen Art, der ausschließlich durch die Nut-Feder-Verbindungen der Dauben zusammengehalten wird, mit möglichst simplen technischen Mitteln und wirtschaftlich preisgünstig dahin gehend zu verbessern, dass er einen wirksamen Frostschutz für die im Behälter befindlichen Pflanzen gewährleistet, wobei er zudem einerseits auch in der Handhabung dieselben Vorteile bieten soll, wie der aus der DE 102 19 049 B4 bekannte gattungsgemäße Behälter, andererseits aber dennoch fertigungstechnisch besonders einfach und preiswert herzustellen sein soll.

Erfindungsgemäß wird diese -vielleicht einfach klingende, aber relativ anspruchsvolle- Aufgabe auf ebenso überraschend einfache wie wirkungsvolle Art und Weise dadurch gelöst, dass der Behälter eine Einrichtung zur thermischen Isolation der Behälterwände sowie des Behälterbodens nach außen hin aufweist, welche eine Vielzahl von Kammern umfasst, die mit Luft und/oder einem Isoliermaterial gefüllt sind, und die durch im zusammengebauten Zustand des Behälters zur Behälter-Innenseite hin gerichtete, an den Dauben und dem Behälterboden angebrachte Stege sowie ein diese Stege zur Behälter-Innenseite hin abdeckendes Einsatzteil gebildet werden.

Auf diese Weise entsteht aufgrund der mit Luft oder Dämmstoff gefüllten Kammern ein äußerst wirksamer Schutz gegen Frosteinwirkung insbesondere für die besonders empfindlichen Wurzeln von im Behälter eingepflanzten Gewächsen, auch wenn der Behälter ganzjährig im Freien platziert bleibt.

Außerdem kann aber der Behälter einerseits ohne Zuhilfenahme von Spezial-Werkzeugen direkt vom Benutzer aus den vorgefertigten und leicht etwa per Post versendbaren Einzelteilen problemlos von Hand zusammengesetzt werden. Anderseits ist die Produktion der Einzelteile des Behälters nach wie vor einfach und kostengünstig.

Eine erste Klasse von besonders bevorzugten Ausführungsformen der Erfindung zeichnet sich dadurch aus, dass das Einsatzteil ebenfalls Stege aufweist, die jedoch im zusammengebauten Zustand des Behälters zu den Dauben oder dem Behälterboden hin gerichtet sind.

Eine zweite, zur ersten Klasse von Ausführungsformen der Erfindung alternativen, besonders bevorzugten Ausführungsformen zeichnet sich dadurch aus, dass das Einsatzteil im zusammengebauten Zustand des Behälters zu den Dauben oder dem Behälterboden hin eine im Wesentlichen glatte Oberfläche aufweist.

Bei bevorzugten Weiterbildungen dieser Klasse von Ausführungsformen wird das Einsatzteil durch ein Vlies, einen Filz, eine Folie oder einen Dämmstoff, vorzugsweise einen wasserspeichernden und/oder frostabwehrenden Dämmstoff gebildet, welcher dem Behälter einen weiteren zusätzlichen Frostschutz verleiht. Wie bei keramischen Pflanzgefäßen kann die Feuchtigkeit, etwa Gießwasser, gespeichert und gegebenenfalls nach einem gewissen Zeitverzug wieder an die Pflanzen im Behälter abgegeben werden. Die Funktion eines derartigen Wasserspeichers wäre etwa in einem einfachen glattwandigen Kunststofftopf nicht möglich.

Bei bevorzugten Ausführungsformen des erfindungsgemäßen Behälters, ist das Einsatzteil starr, insbesondere zerlegbar aufgebaut, vorzugsweise aus Dauben mit angeformten, zu den Behälterwänden beziehungsweise zum Behälterboden hin abstehenden Außenrippen.

Ganz besonders bevorzugt sind Ausführungsformen der Erfindung, die sich dadurch auszeichnen, dass die Dauben und der Behälterboden aus Kunststoff gefertigt, vorzugsweise gespritzt sind, und dass die Stege an den Dauben und am Behälterboden angeformt sind.

Eine Gruppe von Weiterbildungen dieser von Ausführungsformen ist dadurch gekennzeichnet, dass die Dauben und der Behälterboden aus Bio-Kunststoff gefertigt sind, vorzugsweise aus spritzbarem und nach Gebrauch kompostierbarem WPC (=Wood Plastic Composite), insbesondere mit einem Pflanzenfaseranteil von mehr als 20%, speziell mit einem Bindemittelanteil von höchstens 50%.

Vorteilhaft sind auch Ausführungsformen des erfindungsgemäßen Behälters, bei welchen der Behälterboden aus mehreren, vorzugsweise zusammensteckbaren, Einzelteilen aufgebaut ist.

Weitere vorteilhafte Ausführungsformen der Erfindung zeichnen sich dadurch aus, dass die Dauben im Bereich des Behälterbodens zur Behälter-Innenseite hin eine im zusammengebauten Zustand des Behälters umlaufende Nut aufweisen, die gegebenenfalls durch Stege unterbrochen sein kann, und dass oberhalb dieser umlaufenden Nut eine zur Behälter-Innenseite hin gerichtete Verstärkungsnase an den Innenseiten der Dauben vorhanden ist, die im zusammengebauten Zustand des Behälters vorzugsweise umlaufend ist.

Vorteilhaft schließlich sind auch Ausführungsformen des erfindungsgemäßen Behälters, bei welchen der Behälter zylindrisch oder kegelstumpfförmig aufgebaut ist, wobei die Stege der Dauben teils als gekrümmte Rippen azimutal um die Behälterachse, teils als gerade Rippen rechtwinklig zu den gekrümmten Rippen, insbesondere bei einem zylindrischen Behälter parallel zur Zylinderachse oder bei einem kegelstumpfförmigen Behälter unter dem Kegelwinkel zur Behälterachse gekippt, verlaufen.

In der schematischen Zeichnung sind Ausführungsbeispiele der Erfindung dargestellt, welche in der nachfolgenden Detail-Beschreibung näher erläutert werden.

Es zeigen:
- Fig. 1a: eine schematische räumliche Schnitt-Darstellung einer Hälfte einer ersten Ausführungsform des erfindungsgemäßen Behälters im Bodenbereich mit Einsatzteil;
- Fig. 1b: wie Fig. 1a, aber ohne Einsatzteil;
- Fig. 2a: eine schematische voll-räumliche Darstellung der Ausführungsform des erfindungsgemäßen Behälters gemäß Fig. 1b mit Blickrichtung von schräg oben;
- Fig. 2b: wie Fig. 2a, aber mit Blickrichtung von schräg unten auf den Behälterboden;
- Fig. 3a: eine schematische räumliche Darstellung einer Daube für die Behälterwand eines erfindungsgemäßen Behälters mit Blickrichtung von der Behälter-Außenseite;
- Fig. 3b: wie Fig. 3a, aber mit Blickrichtung von der Behälter-Innenseite;
- Fig. 3c: ein vergrößertes Detail der Daube nach Fig. 3b im Endbereich entgegensetzt zum Behälterboden;
- Fig. 4: eine schematische räumliche Darstellung mit Blickrichtung von schräg oben auf eine Boden-Hälfte des erfindungsgemäßen Behälters;
- Fig. 5a: eine schematische Seitenansicht auf eine weitere Ausführungsform des erfindungsgemäßen Behälters;
- Fig. 5b: ein vergrößertes Detail der Ausführungsform nach Fig. 5a im Kantenbereich des Behälterbodens; und
- Fig. 5c: eine schematische Vertikal-Schnittansicht der Ausführungsform nach Fig. 5a ohne Einsatzteil.

Die in den Figuren der Zeichnung schematisch im Detail dargestellten, unterschiedlich gestalteten Ausführungsformen zeigen einen erfindungsgemäß ausgestalteten zerlegbaren **Behälter 1; 1'**, der insbesondere als Pflanzenkübel verwendbar ist, mit über **Nut-Feder-Verbindungen 2** miteinander verbundenen **Dauben 3; 3'**, welche die Behälterwände bilden, sowie mit einem **Behälterboden 4; 4'**, wobei der Behälter 1; 1' ausschließlich durch die Nut-Feder-Verbindungen 2 zusammengehalten wird.

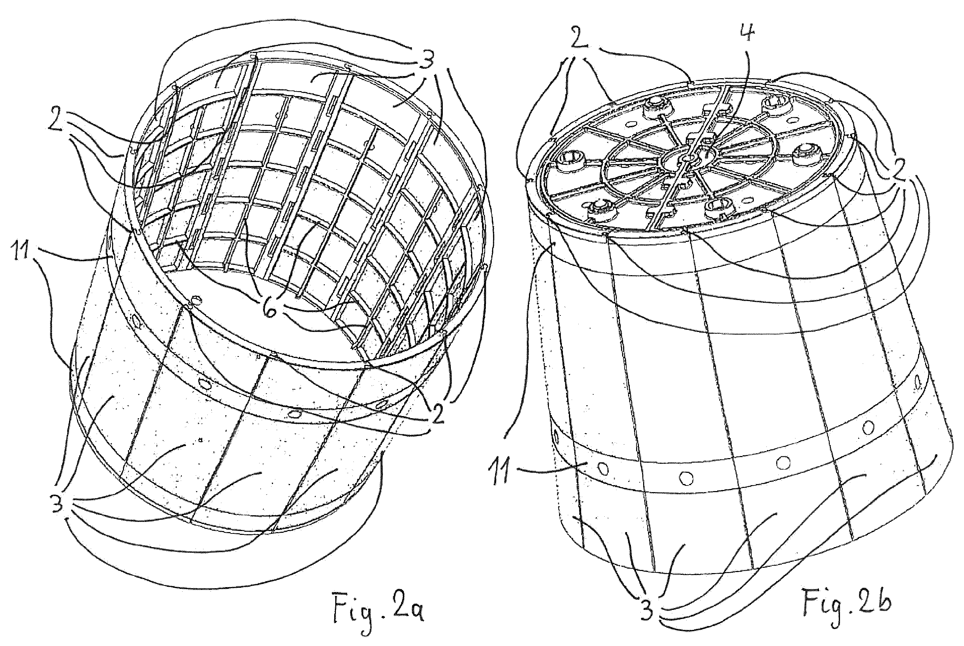

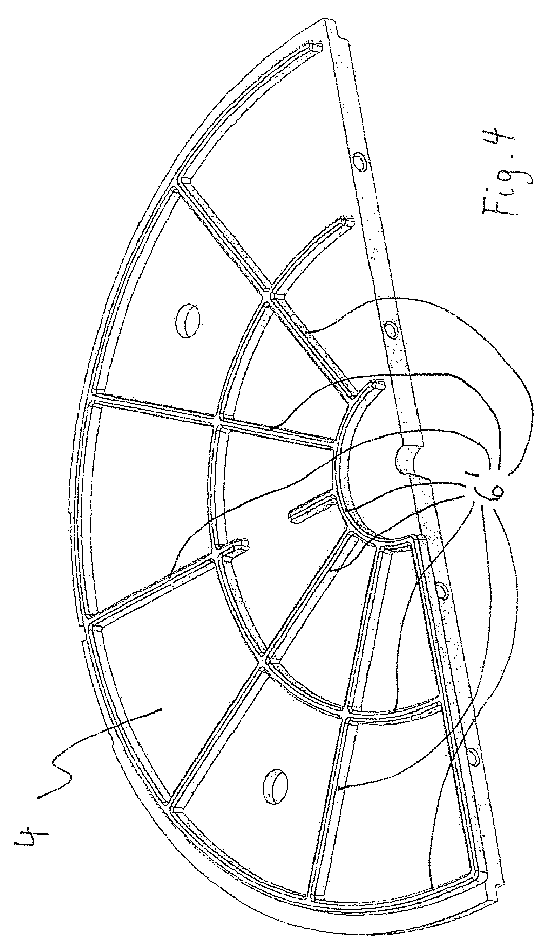

Der Behälterboden 4; 4' kann -wie etwa in den Figuren 2b sowie 4 gezeigt- aus mehreren, vorzugsweise zusammensteckbaren, Einzelteilen aufgebaut sein (bei hier dargestellten Ausführungsformen jeweils aus zwei Hälften).

Erfindungsgemäß weist der Behälter 1; 1' eine Einrichtung zur thermischen Isolation der Behälterwände sowie des Behälterbodens 4; 4' nach außen hin auf, welche eine Vielzahl von **Kammern 5, 5'** umfasst, die mit Luft und/oder einem Isoliermaterial gefüllt sind, und die durch im zusammengebauten Zustand des Behälters 1; 1' zur Behälter-Innenseite hin gerichtete, an den Dauben 3; 3' und dem Behälterboden 4; 4' angebrachte **Stege 6**, **6'** sowie ein diese Stege 6, 6' zur Behälter-Innenseite hin abdeckendes **Einsatzteil 7** gebildet werden.

Der Behälter 1; 1' kann zylindrisch oder kegelstumpfförmig aufgebaut sein, wobei die Stege 6 der Dauben 3; 3' teils als gekrümmte Rippen azimutal um die Behälterachse, teils als gerade Rippen rechtwinklig zu den gekrümmten Rippen, insbesondere bei einem zylindrischen Behälter parallel zur Zylinderachse oder bei einem kegelstumpfförmigen Behälter 1; 1' unter dem Kegelwinkel zur Behälterachse gekippt, verlaufen.

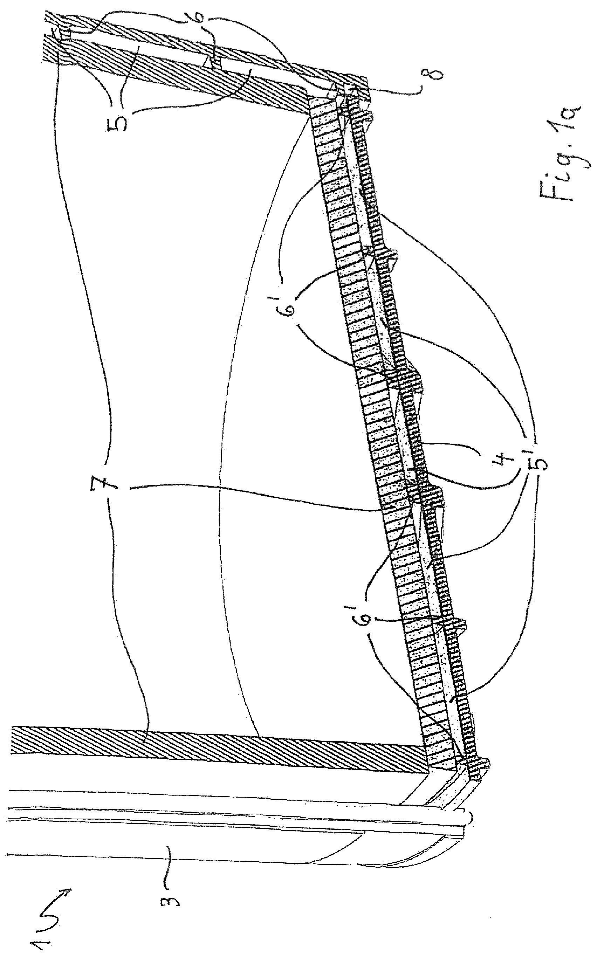

Wie in den Figuren 1a, 1b, 3b sowie 5b dargestellt, können bei Ausführungsformen des erfindungsgemäßen Behälters 1; 1' die Dauben 3; 3' im Bereich des Behälterbodens 4; 4' zur Behälter-Innenseite hin eine im zusammengebauten Zustand des Behälters 1; 1' **umlaufende Nut 8; 8'** aufweisen, die gegebenenfalls durch Stege 6 unterbrochen sein kann. Oberhalb dieser umlaufenden Nut 8; 8' kann eine zur Behälter-Innenseite hin gerichtete **Verstärkungsnase 9** an den Innenseiten der Dauben 3; 3' vorhanden sein, die im zusammengebauten Zustand des Behälters 1; 1' vorzugsweise umlaufend ist.

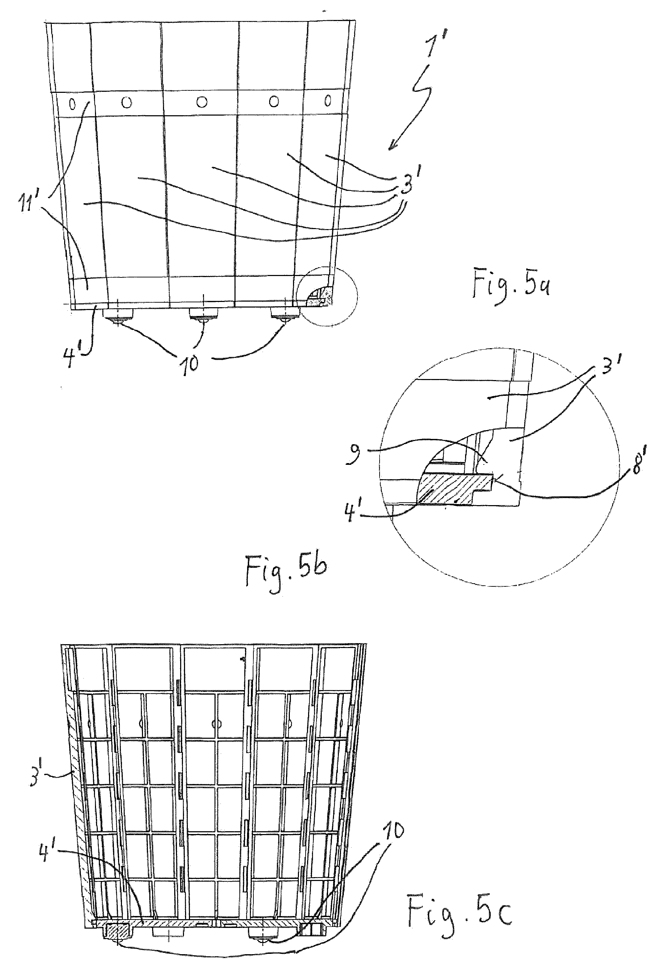

In der Praxis haben sich Ausführungsformen bewährt, bei denen -wie etwa in den Figuren 5a und 5c dargestellt- der Behälterboden 4' an seiner Unterseite **Laufrollen 10** aufweist, die im zusammengebauten Zustand des Pflanzenkübels 1' die bodenseitigen Dauben-Enden überragen. Dabei können von den genannten Laufrollen 10 zwei als Bockrollen und eine als Lenkrolle ausgebildet sein.

Aus ästhetischen Gründen können auch beim hier vorgeschlagenen, ausschließlich durch die Nut-Feder-Verbindungen 2 zusammengehalten Behälter 1; 1' äußere **Reifen 11; 11'** angebracht oder zumindest optisch angedeutet sein, wie etwa in den Figuren 2a, 2b und 5a dargestellt. Diese sind jedoch für die Stabilität des erfindungsgemäßen Behälters 1; 1' keineswegs erforderlich.

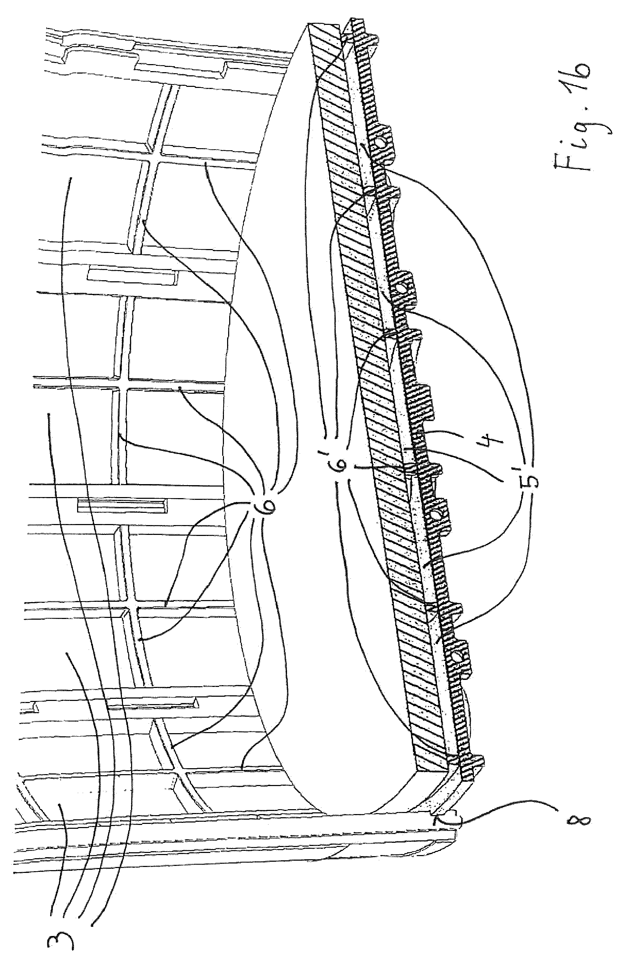

Das Einsatzteil 7 kann, wie in den Figuren 1a, 1b und 4 dargestellt, ebenfalls Stege 6' aufweisen, die jedoch im zusammengebauten Zustand des Behälters 1; 1' zu den Dauben 3; 3' oder dem Behälterboden 4; 4' hin gerichtet sind. Bei anderen Ausführungsformen kann das Einsatzteil 7 im zusammengebauten Zustand des Behälters 1; 1' zu den Dauben 3; 3' oder dem Behälterboden 4; 4' hin eine im Wesentlichen glatte Oberfläche aufweisen.

Bei in den Figuren der Zeichnung nicht eigens dargestellten Ausführungsformen der Erfindung kann das Einsatzteil durch ein Vlies, einen Filz, eine Folie oder einen Dämmstoff, vorzugsweise einen wasserspeichernden und/oder frostabwehrenden Dämmstoff gebildet sein.

In der Regel wird das Einsatzteil 7 starr, insbesondere zerlegbar aufgebaut sein, vorzugsweise aus Dauben mit angeformten, zu den Behälterwänden beziehungsweise zum Behälterboden 4; 4' hin abstehenden Außenrippen 6'.

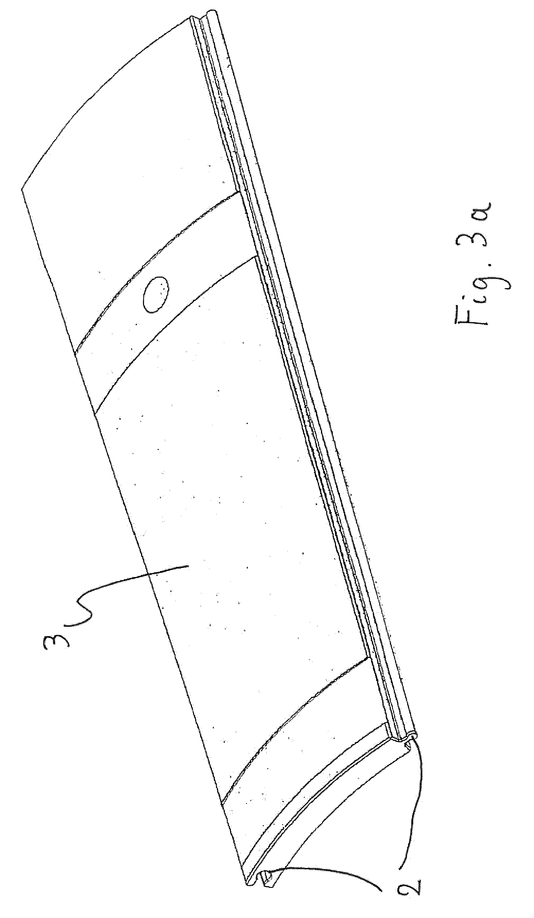

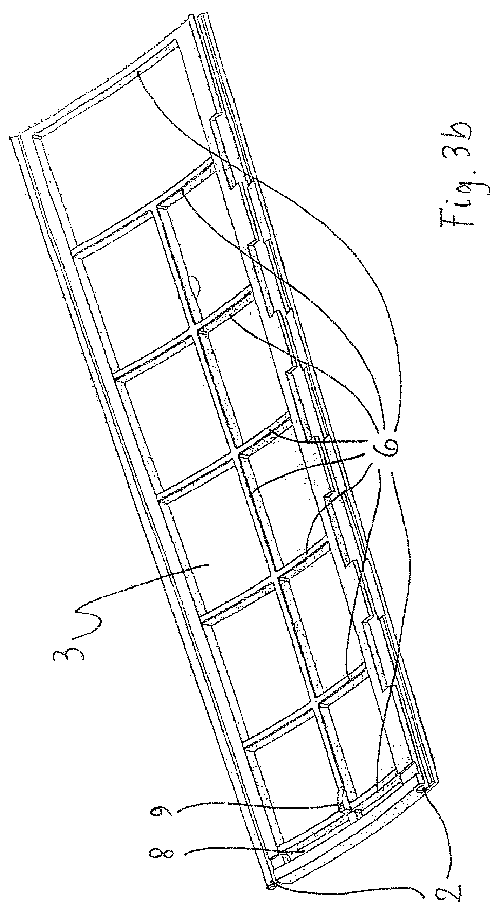

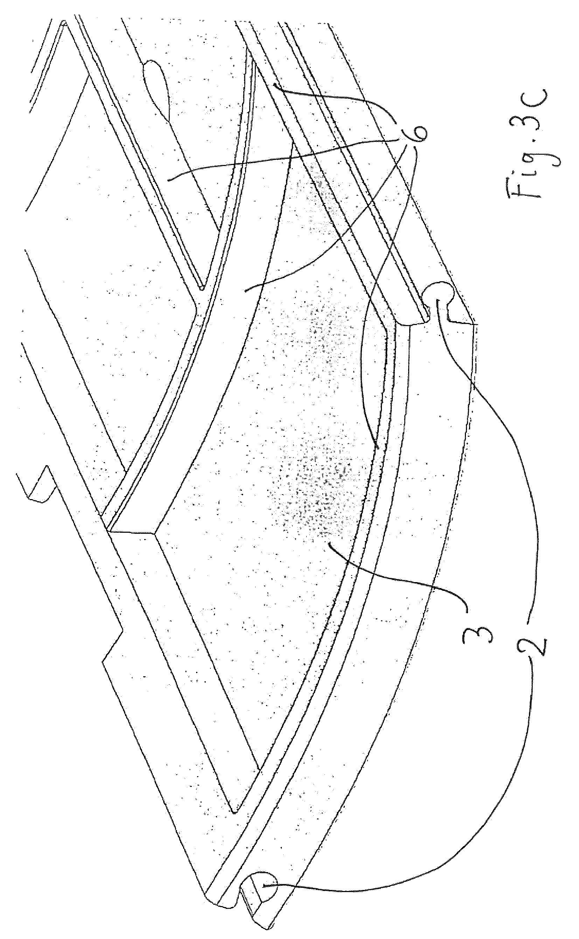

Die Figuren 3a bis 3c zeigen eine Daube 3 einer Ausführungsform des erfindungsgemäßen Behälters 1 im Detail aus verschiedenen räumlichen Perspektiven. Insbesondere die Ausbildung der Nuten und Federn 2 ist in Fig. 3c gut erkennbar.

Meist werden die Dauben 3; 3' und der Behälterboden 4; 4' aus Kunststoff gefertigt, vorzugsweise gespritzt sein, und die Stege 6, 6' sind an den Dauben 3; 3' und am Behälterboden 4; 4' angeformt. Die Dauben 3; 3' und der Behälterboden 4; 4' können aus Bio-Kunststoff gefertigt sein, vorzugsweise aus spritzbarem und nach Gebrauch kompostierbarem WPC (=Wood Plastic Composite), insbesondere mit einem Pflanzenfaseranteil von mehr als 20%, speziell mit einem Bindemittelanteil von höchstens 50%.

Der Zusammenbau des erfindungsgemäßen Behälters 1; 1' erfolgt in der Regel in drei Schritten:
Zunächst werden sämtliche Dauben mit Ausnahme einer letzten Daube zusammengefügt.

Sodann wird der Boden -gegebenenfalls ebenfalls aus mehreren Teilen aufgebaut und- eingefügt.

Schließlich wird auch die letzte Daube -meist von oben her- eingefügt.

## Patentansprüche

1. Zerlegbarer Behälter (1; 1'), insbesondere Pflanzenkübel, mit über Nut-Feder-Verbindungen (2) miteinander verbundenen Dauben (3; 3'), welche die Behälterwände bilden, sowie mit einem Behälterboden (4; 4'), wobei der Behälter (1; 1') ausschließlich durch die Nut-Feder-Verbindungen (2) zusammengehalten wird,
**dadurch gekennzeichnet,**
**dass** der Behälter (1; 1') eine Einrichtung zur thermischen Isolation der Behälterwände sowie des Behälterbodens (4; 4') nach außen hin aufweist, welche eine Vielzahl von Kammern (5, 5') umfasst, die mit Luft und/oder einem Isoliermaterial gefüllt sind, und die durch im zusammengebauten Zustand des Behälters (1; 1') zur Behälter-Innenseite hin gerichtete, an den Dauben (3; 3') und dem Behälterboden (4; 4') angebrachte Stege (6, 6') sowie ein diese Stege (6, 6') zur Behälter-Innenseite hin abdeckendes Einsatzteil (7) gebildet werden.

2. Behälter nach Anspruch 1, **dadurch gekennzeichnet, dass** das Einsatzteil (7) ebenfalls Stege (6') aufweist, die jedoch im zusammengebauten Zustand des Behälters (1; 1') zu den Dauben (3; 3') oder dem Behälterboden (4; 4') hin gerichtet sind.

3. Behälter nach Anspruch 1 oder 2, **dadurch gekennzeichnet, dass** das Einsatzteil (7) im zusammengebauten Zustand des Behälters (1; 1') zu den Dauben (3; 3') oder dem Behälterboden (4; 4') hin eine im Wesentlichen glatte Oberfläche aufweist.

4. Behälter nach Anspruch 3, **dadurch gekennzeichnet, dass** das Einsatzteil durch ein Vlies, einen Filz, eine Folie oder einen Dämmstoff, vorzugsweise einen wasserspeichernden und/oder frostabwehrenden Dämmstoff gebildet wird.

5. Behälter nach einem der Ansprüche 1 bis 3, **dadurch gekennzeichnet, dass** das Einsatzteil (7) starr, insbesondere zerlegbar aufgebaut ist, vorzugsweise aus Dauben mit angeformten, zu den Behälterwänden beziehungsweise zum Behälterboden (4; 4') hin abstehenden Außenrippen (6').

6. Behälter nach einem der vorhergehenden Ansprüche, **dadurch gekennzeichnet, dass** die Dauben (3; 3') und der Behälterboden (4; 4') aus Kunststoff gefertigt, vorzugsweise gespritzt sind, und dass die Stege (6, 6') an den Dauben (3; 3') und am Behälterboden (4; 4') angeformt sind.

7. Behälter nach Anspruch 6, **dadurch gekennzeichnet, dass** die Dauben (3; 3') und der Behälterboden (4; 4') aus Bio-Kunststoff gefertigt sind, vorzugsweise aus spritzbarem und nach Gebrauch kompostierbarem WPC (=Wood Plastic Composite), insbesondere mit einem Pflanzenfaseranteil von mehr als 20%, speziell mit einem Bindemittelanteil von höchstens 50%.

8. Behälter nach einem der vorhergehenden Ansprüche, **dadurch gekennzeichnet, dass** der Behälterboden (4; 4') aus mehreren, vorzugsweise zusammensteckbaren, Einzelteilen aufgebaut ist.

9. Behälter nach einem der vorhergehenden Ansprüche, **dadurch gekennzeichnet, dass** die Dauben (3; 3') im Bereich des Behälterbodens (4; 4') zur Behälter-Innenseite hin eine im zusammengebauten Zustand des Behälters (1; 1') umlaufende Nut (8; 8') aufweisen, die gegebenenfalls durch Stege (6) unterbrochen sein kann, und dass oberhalb dieser umlaufenden Nut (8; 8') eine zur Behälter-Innenseite hin gerichtete Verstärkungsnase (9) an den Innenseiten der Dauben (3; 3') vorhanden ist, die im zusammengebauten Zustand des Behälters (1; 1') vorzugsweise umlaufend ist.

10. Behälter nach einem der vorhergehenden Ansprüche, **dadurch gekennzeichnet, dass** der Behälter (1; 1') zylindrisch oder kegelstumpfförmig aufgebaut ist, und dass die Stege (6) der Dauben (3; 3') teils als gekrümmte Rippen azimutal um die Behälterachse, teils als gerade Rippen rechtwinklig zu den gekrümmten Rippen, insbesondere bei einem zylindrischen Behälter parallel zur Zylinderachse oder bei einem kegelstumpfförmigen Behälter (1; 1') unter dem Kegelwinkel zur Behälterachse gekippt, verlaufen.
